# EUROPÄISCHE PATENTSCHRIFT

(11) **EP 3 055 089 B1**
(45) Veröffentlichungstag und Bekanntmachung des Hinweises auf die Patenterteilung: **27.11.2019**
(21) Anmeldenummer: 14808483.3
(22) Anmeldetag: 09.10.2014
(51) Int. Cl.: B22C 7/02, B22C 9/10, B22D 29/00

(54) **FEINGUSSVERFAHREN HOHLER BAUTEILE**
INVESTMENT CASTING OF HOLLOW COMPONENTS
PROCÉDÉ DE MOULAGE DE PRÉCISION DE PIÈCES CREUSES

(30) Priorität: 11.10.2013 DE 102013016868
(43) Veröffentlichungstag der Anmeldung: 17.08.2016
(73) Patentinhaber: FLC Flowcastings GmbH, 65468 Trebur (DE)
(72) Erfinder: SCHILLING, Heikko, 65468 Trebur (DE)
(74) Vertreter: Hoffmann Eitle
(86) Internationale Anmeldenummer: PCT/EP2014/002739
(87) Internationale Veröffentlichungsnummer: WO 2015/051916

(56) Entgegenhaltungen:
- US-A- 5 339 888
- US-A- 5 465 780
- US-A1- 2007 039 709
- US-B2- 7 458 411

## Beschreibung

Diese Erfindung betrifft auf dem Gebiet von Feinguss ein Verfahren zur Herstellung eines Gussteils, das Hohlraumstrukturen aufweist, mittels einer keramischen Form.

Feinguss findet bekanntlich unter Verwendung eines verlorenen Modells in einer verlorenen Form statt, die in Gestalt einer einmal verwendbaren Keramikbeschichtung des Modells gebildet wird. Das bekannte Verfahren umfasst die folgenden Schritte:
- Herstellung eines positiven Modells (in der gleichen Gestalt wie das zu produzierende Gussteil) aus hartem oder elastischem Material;
- Herstellung einer temporären Form durch Gießen einer Flüssigkeit über das Modell und Abkühlen bis zu ihrer Erstarrung;
- Extrahieren des Modells;
- Bilden eines temporären Modells durch Gießen einer zweiten Flüssigkeit in den Hohlraum der temporären Form und Abkühlen bis zu Ihrer Erstarrung;
- Schmelzen oder Lösen der temporären Form;
- Keramische Beschichtung des temporären Modells, um eine feste Keramikschale um das temporäre Modell auszubilden;
- Schmelzen oder Lösen des temporären Modells und Evakuieren der dabei anfallenden Flüssigkeit aus der Keramikschale;
- Füllen des Hohlraums der Schale mit geschmolzenem Metall und erstarren lassen, um so das endgültige Gussteil zu bilden.

Die meisten Hersteller von Gasturbinen arbeiten an verbesserten mehrwandigen und dünnwandigen Gasturbinenschaufeln aus Superlegierungen. Diese weisen komplizierte Luftkühlungskanäle auf, um die Effizienz der Schaufelinnenkühlung zu verbessern, um mehr Schub zu ermöglichen und eine zufriedenstellende Lebensdauer zu erzielen. Die US-Patente 5.295.530 und 5.545.003 richten sich auf verbesserte mehrwandige und dünnwandige Gasturbinenschaufel-Designs, die zu diesem Zweck komplizierte Luftkühlkanäle aufweisen.

Das erfindungsgemäße Verfahren ermöglicht die Herstellung aller Arten von hochwertigen Gussteilen, denn es ermöglicht, unabhängig von deren Komplexität, das Bilden eines verlorenen Modells in einer verlorenen Form, bannt gleichzeitig die Bruch- und Verformungsgefahr verlorener Modelle und vermeidet die Notwendigkeit der Verwendung von Kernen, die gegen Verformung anfällig sind.

Feinguss ist einer der ältesten bekannten Umformungsprozesse, der vor Tausenden von Jahren erstmals verwendet wurde, um detailliertes Kunsthandwerk aus Metallen wie Kupfer, Bronze und Gold zu produzieren. Industrieller Feinguss wurde gebräuchlich in den 1940er Jahren, als der Zweite Weltkrieg den Bedarf an maßgenauen Teilen aus spezialisierten Metalllegierungen steigerte. Heute findet Feinguss häufig in der Luftfahrt- und Energieindustrie Verwendung, um Gasturbinenkomponenten wie Schaufeln und Leitflächen mit komplexen Formen und internen Kühlkanalgeometrien zu erzeugen.

Die Herstellung einer Gasturbinenlaufschaufel oder -leitschaufel aus Feinguss umfasst die Herstellung einer keramischen Gießform mit einer äußeren keramischen Schale mit einer Innenfläche, die der Flügelform entspricht, und einem oder mehreren keramischen, innerhalb der äußeren keramischen Schale positionierten Kernen, entsprechend den internen Kühlkanälen, die innerhalb der Tragfläche auszubilden sind. Geschmolzene Legierung wird in die keramische Gießform eingegossen, kühlt dann ab und härtet aus. Die äußere Keramikschale und der oder die keramischen Kerne werden dann auf mechanischem oder chemischem Wege entfernt, um das gegossene Schaufelblatt mit der externen Profilform und den Hohlformen der internen Kühlkanäle (in der Gestalt des oder der keramischen Kerne) freizulegen.

Es gibt eine Vielzahl von Techniken zur Bildung von Formeinsätzen und Kernen mit durchaus komplizierten und detailreichen Geometrien und Abmessungen. Eine ebenso vielfältige Reihe von Techniken wird eingesetzt, um die Einsätze in den Formen zu positionieren und zu halten. Die am weitesten verbreitete Technik zum Halten von Kernen in Formanordnungen ist das Positionieren von kleinen Keramikstiften, die einstückig mit der Form oder dem Kern oder beiden ausgebildet sein können und die von der Oberfläche der Form zur Oberfläche des Kerns ragen und dazu dienen, den Kerneinsatz zu positionieren und zu stützen. Nach dem Gießen werden die Löcher in dem Gussteil gefüllt, beispielsweise durch Schweißen oder dergleichen, bevorzugt mit der Legierung, aus der das Gussteil ausgebildet ist.

Der Keramikkern wird typischerweise durch Spritzgießen, Spritzpressen oder Gießen einer geeigneten Flüssigkeit von keramischem Kernmaterial in die gewünschte Kerngestalt gebracht. Das keramische Kernmaterial umfasst eine oder mehrere keramische Pulver, ein Bindemittel und optional Zusätze, die in ein entsprechend geformtes Kernfonnwerkzeug gegossen werden.

Ein keramischer Kern für Spritzguss wird hergestellt, indem zuerst die gewünschte Kernform in entsprechenden Gießformhälften des Kerns aus verschleißbeständigem gehärtetem Stahl durch Präzisionsbearbeitung ausgebildet wird, und die Formhälften dann zu einem Injektionsvolumen entsprechend der gewünschten Kernform zusammengebracht werden, woraufhin das Einspritzen keramischer Formmasse in das Injektionsvolumen unter Druck erfolgt. Die Formmasse enthält wie gesagt eine Mischung aus Keramikpulver und Bindemittel. Nachdem die keramische Formmasse zu einem "Grünling" ausgehärtet ist, werden die Formhälften getrennt, um den Grünling freizugeben.

Nachdem der Grünkörper-Formkern aus der Form entfernt wurde, wird er bei hoher Temperatur in einem oder mehreren Schritten gebrannt, um das flüchtige Bindemittel zu entfernen und den Kern zu sintern und zu härten, und zwar zur Verwendung beim Gießen von metallischem Material wie beispielsweise einer Nickel- oder Kobaltbasierten Superlegierung. Diese werden normalerweise verwendet, um Einkristall-Gasturbinenschaufeln zu gießen.

Beim Gießen der hohlen Gasturbinenschaufeln mit inneren Kühlkanälen wird der gebrannte Keramikkern in eine keramische Feingießschalenform positioniert, um die internen Kühlkanäle im Gussteil auszubilden. Der gebrannte keramische Kern im Feinguss von hohlen Schaufeln hat typischerweise eine strömungsoptimierte Kontur mit einer Anströmkante und einer Abströmkante von dünnem Querschnitt. Zwischen diesen vorderen und hinteren Randbereichen kann der Kern längliche, aber auch anders geformte Öffnungen aufweisen, um so Innenwände, Stufen, Umlenkungen, Rippen und ähnliche Profile zu bilden zum Abgrenzen und Herstellen der Kühlkanäle in der gegossenen Turbinenschaufel.

Der gebrannte keramische Kern wird dann bei der Herstellung der äußeren Formschale im bekannten Wachsausschmelzverfahren eingesetzt, wobei der Keramikkern in einem Modellformwerkzeug angeordnet und ein verlorenes Modell um den Kern gebildet wird, und zwar durch Einspritzen unter Druck von Modellwerkstoff wie Wachs, Thermoplast oder dergleichen in die Form in den Raum zwischen dem Kern und den Innenwänden der Form.

Die vollständige Gießform aus Keramik wird durch Positionieren des Keramikkerns innerhalb der beiden zusammengefügten Hälften einer anderen Form aus feinbearbeitetem gehärteten Stahl (bezeichnet als Wachsmodellform oder Wachsmodellwerkzeug) gebildet, die ein Einspritzvolumen definiert, das der gewünschten Form der Schaufel entspricht, um dann geschmolzenes Wachs in die Wachsmodellform um den keramischen Kern einzuspritzen. Wenn das Wachs ausgehärtet ist, werden die Hälften der Wachsmodellform getrennt und entfernt, und sie gegeben den keramischen Kern frei umhüllt von einem Wachsmodell, das jetzt der Schaufelform entspricht.

Das temporäre Modell mit dem keramischen Kern darin wird wiederholt Schritten zum Aufbau der Schalenform darauf unterworfen. Zum Beispiel wird die Modell/Kern-Baugruppe wiederholt in Keramikschlicker eingetaucht, überschüssiger Schlicker wird abfließen gelassen, mit Keramikstuck besandet und dann luftgetrocknet, um mehrere keramische Schichten aufzubauen, die auf der Anordnung die Formschale bilden. Die resultierende umhüllte Modell/Kern-Anordnung wird dann dem Schritt, das Modell zum Beispiel per Dampfautoklav zu entfernen, unterzogen, um gezielt das temporäre oder verlorene Modell zu beseitigen, so dass die Formschale mit dem darin angeordneten Keramikkern übrig bleibt. Die Formschale wird dann bei hoher Temperatur gebrannt, um eine angemessene Festigkeit der Formschale für den Metallguss herzustellen.

Geschmolzenes metallisches Material wie eine Nickel- oder Kobalt-Basis-Superlegierung wird in die vorgewärmte Schalenform gegossen und erstarrt, um ein Gussteil mit polykristallinem oder einkristallinem Korn zu erzeugen. Das resultierende gegossene Schaufelblatt enthält noch den keramischen Kern, um so nach Entfernen des Kerns die internen Kühlkanäle auszubilden. Der Kern kann durch Auswaschen oder andere herkömmliche Techniken entfernt werden. Das hohl gegossene metallische Strömungsprofil-Gussteil ist entstanden.

Dieses bekannte Feingussverfahren ist teuer und zeitaufwendig. Mit der Entwicklung eines neuen Schaufeldesigns sind typischerweise viele Monate und Hunderttausende von Dollar Investition verbunden. Darüber hinaus sind Design-Entscheidungen limitiert durch verfahrensbedingte Einschränkungen bei der Herstellung von keramischen Kernen etwa wegen deren Fragilität sowie durch die zeitaufwändige Herstellung bei detailreichen oder großen Kernen. Die Metall verarbeitende Industrie hat diese Grenzen zwar erkannt und hat zumindest einige graduelle Verbesserungen entwickelt wie zum Beispiel das verbesserte Verfahren zum Gießen von Kühlkanälen an einer Schaufelabströmkante in US-Patent Nr. 7.438.527. Da der Markt aber nach immer höherer Effizienz und Leistung von Gasturbinen verlangt, werden die Grenzen der bestehenden Feingussprozesse immer problematischer.

Feingusstechniken sind anfällig für eine Reihe von Ungenauigkeiten. Während Ungenauigkeiten an der Außenkontur sich oft mit herkömmlichen Fertigungstechniken korrigieren lassen, sind diejenigen an internen strukturellen Formen von Kernen schwierig und oft sogar unmöglich zu beseitigen.

Interne Ungenauigkeiten ergeben sich aus bekannten Faktoren. Dies sind in der Regel Ungenauigkeiten beim Herstellen der Kernstruktur, Ungenauigkeiten beim Umspritzen des Kerns im Wachswerkzeug während der Fertigung, Montage der Form, unerwartete Veränderungen oder Defekte durch Ermüdung der keramischen Formen und Versagen der Schale, des Kerns oder der Befestigungselemente während der Herstellung, Montage und Handhabung vor oder während des Gießvorgangs.

Die genaue Gestaltung, Dimensionierung und Positionierung des Kerneinsatzes wurde zum schwierigsten Problem bei der Herstellung von Formen. Diese Aspekte des Feinguss liegen der Erfindung zu Grunde, obwohl das Verfahren der vorliegenden Erfindung sich auch in anderer Technologie anwenden lässt.

Typischerweise sind die Herstellung von Gussform und Kern in der Möglichkeit, feine Details mit hinreichender Auflösung zuverlässig auszubilden, beschränkt. In Bezug auf die Genauigkeit der Positionierung, zuverlässiger Abmessungen und auf die Erzeugung von komplexen und detailreichen Formen sind die bekannten Systeme sehr begrenzt.

Die Kerneinsätze sind in der Regel Formteile, hergestellt unter Verwendung von üblichem Spritzen oder Formen von Keramik, gefolgt von geeigneten Brenntechniken. Es liegt in der Natur dieser Keramikkerne, dass die Genauigkeit wesentlich geringer ist als etwa die in Metallgießverfahren erreichbare. Es gibt weit größeres Schwinden in den üblichen Keramikgießmassezusammensetzungen oder Fehler wie eine viel größere Neigung zu Rissbildung, Blasen und anderen Defekten. Es besteht daher eine hohe Fehler- und Ausschussrate, die sich aus unkorrigierbaren Mängeln ergibt verursacht durch fehlerhafte Kerne und Kernpositionierung. Oder zumindest ein hoher Aufwand beim Nacharbeiten wird erforderlich, um die Gussteile, die außerhalb der Toleranzen liegen, zu korrigieren, wenn sie einer Korrektur durch Nachbearbeitung, Schleifen und dergleichen, überhaupt zugänglich sind. Die Produktivität und Effizienz des Feingussverfahrens werden im Wesentlichen durch diese Einschränkungen begrenzt.

Ein weiterer limitierender Aspekt von Feinguss war immer auch die beträchtliche Vorlaufzeit für die Entwicklung der Formwerkzeuge üblicherweise aus Metall für die Kerne und das temporäre Modell sowie der damit verbundene hohe Aufwand. Die Entwicklung der einzelnen Phasen des Formwerkzeugs, einschließlich insbesondere der Geometrie und der Abmessungen der Wachsformen, die Geometrie und Dimension des Grünkörpers und der Endgeometrie der gebrannten Formen, insbesondere der Kerne, und die resultierende Konfiguration und Dimensionierung des Gussteils hergestellt in diesen Formwerkzeugen sind abhängig von einer Vielzahl von Variablen, einschließlich Verzug, Schwindung und Rissbildung während der verschiedenen Herstellungsschritte und insbesondere während des Brennens der keramischen Grünkörper. Wie dem Fachmann auf dem Gebiet gut bekannt ist, sind diese Parameter nicht genau vorhersehbar, und die Entwicklung der Feingussformen ist ein hoch iterativer und empirischer Prozess von Versuch und Irrtum, der für komplexe Gussteile sich typischerweise über einen Zeitraum von zwanzig bis 50 Wochen erstreckt, bevor der Prozess in Betrieb genommen werden kann.

Daraus ergibt sich, dass komplexer Feinguss von Hohlkörpern insbesondere auf die Herstellung von Einzelteilen beschränkt ist, und Gießen in beträchtlicher Stückzahl ist in der Regel nicht möglich aufgrund begrenzter Zykluszahlen des Verfahrens und seiner Elemente, insbesondere der Formwerkzeuge. Änderungen im Design der Gussteile erfordern Werkzeugnachbearbeitung entsprechenden Ausmaßes, und sind daher sehr teuer und zeitaufwendig.

Die US 5465780 A beschreibt ein herkömmliches Verfahren zur Herstellung von Turbinenschaufeln mittels Feinguss mit verlorenen Kernen und gegossenen Wachsmodellen.

Der Stand der Technik hat diesen Problemen Aufmerksamkeit geschenkt und hat Fortschritte bei der Verwendung verbesserter keramischer Zusammensetzungen gemacht, die das Auftreten solcher Probleme zu einem gewissen Grad reduzieren.

Obwohl diese Techniken zu Verbesserungen geführt haben, gehen sie zu Lasten der Kosten des Gießvorgangs, und erreichen dennoch nicht alle erwünschten Verbesserungen.

Bei jenen Techniken, die ein Einwirken auf die Grünkörper und insbesondere ein maschinelles Bearbeiten der Grünkörper umfassen, hat die Erfahrung gezeigt, dass die Veränderungen in der Dimension beim Brennen der keramischen Körper dann immer noch eine Reihe von Ungenauigkeiten verursacht, die die Verwirklichung der angestrebten Geometrie und Dimensionen der gebrannten Körper begrenzen. Wegen der Fragilität der Grünlinge sind die Techniken, die eingesetzt werden können, begrenzt, und in der Regel wird erhebliche Handarbeit erforderlich. Selbst mit den besten Vorsichtsmaßnahmen und größter Sorgfalt wird ein erheblicher Anteil der Kerne durch die Arbeitsvorgänge schließlich zerstört.

Aber besonders nachteilig erreichen die Bemühungen des Standes der Technik selbst auf dem neuesten Stand wenig, um die Zykluszeit der Formwerkzeug-Entwicklung zu verbessern, oder um die Anzahl der notwendigen Iterationen zu reduzieren, die für das Herstellen der endgültigen Formwerkzeuge in der erforderlichen Genauigkeit der Form und Abmessungen benötigt wird. Der Stand der Technik liefert keine effektiven Techniken zum Überarbeiten der Form von Schale und Kernen, die außerhalb der Spezifikationen liegen, oder um die Formen für Design-Änderungen zu verändern, ohne den Formwerkzeug-Entwicklungsprozess erneut aufzunehmen.

Zusätzlicher Stand der Technik umfasst das Mahlen von Wachsen besonders in dentalen Anwendungen, für die es aber keine direkte Anwendung im Feinguss gibt.

Es ist eine Aufgabe der vorliegenden Erfindung, ein Verfahren zur Herstellung von Feingussformen und insbesondere von Formkernen hoher und verbesserter Reproduzierbarkeit, Maßhaltigkeit und Genauigkeit zu liefern.

Diese Aufgabe wird von einem Verfahren mit den Merkmalen des Anspruchs 1 gelöst. Bevorzugte Ausgestaltungen sind in den Unteransprüchen angegeben.

Ein mit der Erfindung erreichter Vorteil ist es, die Verwendung von Werkzeug, das bisher zum Einspritzen von Wachsmodellen und Kernen erforderlich war, zu vermeiden, und so die Werkzeugentwicklungs-Zykluszeit zum Herstellen von Feingussformen und Kernen mit hoher Genauigkeit und komplexer Geometrie zu reduzieren.

Ein weiterer Vorteil des erfindungsgemäßen Verfahrens ist es, die Geometrie und die Abmessungen der Feingussformen und -kerne schnell verändern zu können, um sie für Konstruktionsänderungen bereitzustellen, ohne dabei den Werkzeug-Entwicklungszyklus zu wiederholen.

Die vorliegende Erfindung betrifft ein Verfahren zur Herstellung eines Gussteils, das Hohlraumstrukturen aufweist, unter Verwendung eines dreidimensionalen (3D-) Modells digitaler Geometriekoordinaten des Gussteils im Feinguss mittels einer keramischen Form, wobei das Verfahren die folgenden Schritte umfasst:
- (optional zunächst) Anpassen der Geometrie im 3D-Modell eines Kerns zum Herstellen der Hohlraumstrukturen für ein erstes (vorzugsweise zumindest in seinem letzten Schritt nicht-gusstechnisches) CNC-Herstellungsverfahren des Kerns;
   a) Computernumerisch gesteuerte (CNC-) Herstellung des Kerns gemäß dem 3D-Modell in dem ersten CNC-Herstellungsverfahren (vorzugsweise durch Fräsen oder in einem generativen Fertigungsverfahren wie zum Beispiel 3D-Drucken, selektivem Laserschmelzen oder -sintern);
   b) Positionieren des Kerns in einer Bearbeitungshalterung;
   c) Gießen von Modellwerkstoff (vorzugsweise Modellwachs) um den Kern herum in ein Volumen größer als das Gussteil (vorzugsweise allseits bis über die Gussteilkubatur hinaus, welche gemäß dem 3D-Modell räumlich festgelegt ist durch die Position des Kerns in der Bearbeitungshalterung) und erstarren Lassen des Modellwerkstoffs;
   d) CNC-Herstellung einer Außenkontur eines temporären (verlorenen) Modells des Gussteils um den Kern herum aus dem erstarrten Modellwerkstoff gemäß dem 3D-Modell in einem (vorzugsweise zumindest in seinem letzten Schritt nicht-gusstechnischen) zweiten CNC-Herstellungsverfahren (zum Beispiel spanend, vorzugsweise durch Fräsen);
   e) Aufbringen einer keramischen Formschale (vorzugsweise aus hochtemperaturbeständiger Keramik) auf die Außenkontur des verlorenen Modells und Ausbilden einer positionierenden Verbindung der keramischen Form mit der Bearbeitungshalterung;
   f) Ausschmelzen des verlorenen Modells aus der keramischen Form um den Kern in der Bearbeitungshalterung;
   g) Sintern der keramischen Gussform
   h) Gießen von geschmolzenem Metall in die keramische Form um den Kern in der Bearbeitungshalterung;
   i) Erstarren des geschmolzenen Metalls zu dem festen Gussteil und
   j) Entfernen der keramischen Form und des Kerns von dem Gussteil.

Auch die erfindungsgemäße Herstellung zum Beispiel einer Gasturbinenschaufel aus Feinguss umfasst die Herstellung einer keramischen Gießform mit einer äußeren keramischen Schale mit einer Innenfläche, die der Kontur der Gasturbinenschaufel entspricht, und einem oder mehreren keramischen, innerhalb der äußeren keramischen Schale positionierten Kernen, entsprechend den internen Kühlkanälen, die innerhalb der Tragfläche auszubilden sind. Geschmolzene Legierung wird in die keramische Gießform eingebracht, kühlt dann ab und härtet aus. Die äußere Keramikschale und der oder die keramischen Kerne werden dann auf mechanischem oder chemischem Wege entfernt, um das gegossene Schaufelblatt mit der externen Profilform und den Hohlformen der internen Kühlkanäle (in der Gestalt des oder der keramischen Kerne) freizulegen.

Der Keramikkern wird erfindungsgemäß aber computernumerisch gesteuert (CNC - Computer Numeric Control) hergestellt, und zwar als Negativform oder Komplementärform von Hohlraumstrukturen gemäß dem 3D-Modell des herzustellenden Gussteils. In diesem ersten CNC-Herstellungsverfahren von Schritt a) können Fräsen und/oder ein generatives Fertigungsverfahren wie zum Beispiel 3D-Drucken, selektives Laserschmelzen oder -sintern zum Einsatz kommen.

Das 3D-Modell kann zuvor in dem optionalen ersten Schritt mittels CAD so angepasst werden, dass es für den Feinguss und insbesondere auch für die CNC-Herstellung geeignet, insbesondere dimensioniert ist.

In den erfindungsgemäßen CNC-Verfahren (in Schritt a) und/oder d)) werden die Befehle zur Steuerung einer ausführenden Werkzeugmaschine entsprechend mindestens eines Abschnitts des 3D-Modells des Kerns und/oder des Modells erzeugt.

In Schritt a) wird der mindestens eine Formkerneinsatz mit hoher und reproduzierbarer Genauigkeit erfindungsgemäß zum Beispiel auch durch Gießen eines Rohlings des Kerneinsatzes aus Keramik, Brennen der Keramik und Endbearbeiten des Kernelements unter Verwendung von einem oder mehreren Bearbeitungstechniken wie zum Beispiel Fräsen gebildet.

Der Kerneinsatz kann spanend aus einem Block vorgesinterter oder Sinterkeramik mit gleichmäßiger Porosität herausgearbeitet werden, wobei Schwindung während der nachfolgenden Verarbeitung und Handhabung sogar erlaubt, weil vorhersehbar ist. Es ist nämlich möglich, Blöcke vorgesinterter oder Sinterkeramik mit sehr gleichmäßigen und sehr vorhersagbarer Schwindung herzustellen. Dies ermöglicht genaueres Gießen gegenüber herkömmlich hergestellten Kernen (deren Porosität und Schwindungseigenschaften beträchtlich variieren).

Die Oberflächen der Kerne können nach der Bearbeitung beschichtet werden, um eine glatte Formoberfläche für das Gießen herzustellen. Die Oberfläche der Keramik bildet eine entsprechend glatte Oberfläche des in der Form urzuformenden Gussteils ab.

In Schritt b) werden ein oder mehrere bearbeitete Kerneinsätze in einer vorzugsweise an diese angepasst gestalteten Bearbeitungshalterung positioniert, um insgesamt höchste Bauteilmaßhaltigkeit insbesondere auch zwischen Kern- und Außenkontur zu gewährleisten. Denn die Bearbeitungshalterung dient auch als Grundlage für die Festlegung von mindestens einem Bezugspunkt zwischen Kerngeometrie und der nachfolgenden hochpräzisen CNC-Formgebung der Außenkontur des verlorenen Modells, zum Beispiel dem CNC-Fräsen des Wachsblocks in Schritt d).

Nachdem in Schritt a) der letzte Kern zum Beispiel auf einer 5-Achs-CNC-Fräsmaschine gefräst wurde, wird in Schritt c) der Modellwerkstoff insbesondere Temperatur-geführt in die Halterung in ein Volumen gegossen, und bildet beim Erstarren einen Modellwerkstoffblock mit dem einen oder mehreren Kerneinsätzen in seinem Inneren. Das Volumen ragt vorzugsweise allseits bis über die Gussteilkubatur gemäß dem 3D-Modell hinaus. Die Gussteilkubatur ist gemäß dem 3D-Modell räumlich durch die Position des Kerns in der Bearbeitungshalterung festgelegt.

Die genannte Bearbeitungshalterung einschließlich des Modellwerkstoffblocks wird danach zum Beispiel in eine CNC-5-Achs-Fräsmaschine positioniert, um auch beim dann erfolgenden Fräsen der Außenkontur des verlorenen Wachsmodells höchste Bearbeitungsgenauigkeit zu gewährleisten. Der Modellwerkstoffblock kann in der CNC-Werkzeugmaschine Bauteil-konstruktiven Anforderungen entsprechend zu höchster Oberflächenqualität und Maßgenauigkeit bearbeitet werden. Positionsgenauigkeit dieser Bearbeitung in Schritt d) gegenüber dem Kern kann schon durch im Maschinenbau übliche Passungs- und Positioniermaßnahmen beim Einspannen des Kerns in der Bearbeitungshaltung und der Bearbeitungshaltung in der CNC-Werkzeugmaschine gewährleistet werden. Alternativ oder kumulativ kann am Kern (und/oder der Bearbeitungshaltung) aber auch eine Referenzpositionergeometrie angebracht sein, die nun insbesondere vor Schritt d) von der CNC-Werkzeugmaschine angesteuert wird, um die CNC-Werkzeugweg-Befehle daran zu orientieren und/oder zu kontrollieren.

Die vollständige Gießform aus Keramik wird also folgendermaßen gebildet: Durch Positionieren des Keramikkerns innerhalb der Volumenform für den Modellwerkstoff und Gießen von Modellwerkstoff wie zum Beispiel Wachs dort hinein entsteht nach dessen Aushärten ein Rohling der verlorenen Form. Wenn das Wachs ausgehärtet ist, wird die Außenkontur des Gussteils (etwa die Form des Turbinenelements) im CNC-Verfahren vorzugsweise gefräst. Dieses verlorene Modell mit dem keramischen Kern darin wird nun wiederholt Schritten zum Aufbau der Schalenform darauf unterworfen. Zum Beispiel wird die Modell/Kern-Baugruppe wiederholt in Keramikschlicker eingetaucht, überschüssiger Schlicker wird abfließen gelassen, mit Keramikstuck oder Sand benetzt und dann luftgetrocknet, um mehrere keramische Schichten aufzubauen, die auf der Anordnung die Formschale bilden. Die resultierende umhüllte Modell/Kern-Anordnung wird dann dem Schritt, das Modell zum Beispiel per Dampfautoklav zu entfernen, unterzogen, um gezielt das temporäre oder verlorene Modell zu beseitigen, so dass die Formschale mit dem darin angeordneten Keramikkern übrig bleibt. Die Formschale wird dann bei hoher Temperatur gebrannt, um eine angemessene Festigkeit der Formschale für den Metallguss herzustellen.

Flüssiges metallisches Material wie eine Nickel- oder Kobalt-Basis-Superlegierung wird in die vorgewärmte Schalenform gegossen und erstarrt, um ein Gussteil mit gleichachsigem oder gerichtet erstarrtem polykristallinem Korn oder als Einkristall zu erzeugen. Die resultierende gegossene Schaufel enthält noch den keramischen Kern, um so nach Entfernen des Kerns die internen Kühlkanäle auszubilden. Der Kern kann durch Auswaschen oder andere herkömmliche Techniken entfernt werden. Das hohl gegossene metallische Gussteil ist erfindungsgemäß entstanden.

Einer der größten Vorteile des Verfahrens der vorliegenden Erfindung ist die Verringerung der Durchlaufzeit zur Herstellung von Formteilen und die Beschleunigung des Entwicklungsprozesses der Formen. Der iterative Prozess der bislang in der Technik üblichen Entwicklung wird erfindungsgemäß stark reduziert oder sogar vermieden, weil es keine Notwendigkeit insbesondere, eine endgültige "Netto"-Form unter Berücksichtigung von nachträglichen Formgestaltungsvorgängen in der keramischen Gussformtechnik, wie zum Beispiel Schrumpfen und Schwinden, zu erreichen. Da die endgültige Form unmittelbar hergestellt werden kann, ist die erfindungsgemäße Herstellung von Feingussstücken gewünschter Form und Abmessungen nicht mehr schwierig und zeitaufwendig, indem vor allem Verfahrensschleifen von trial and error vermieden werden können, wie sie im Stand der Technik erforderlich sind.

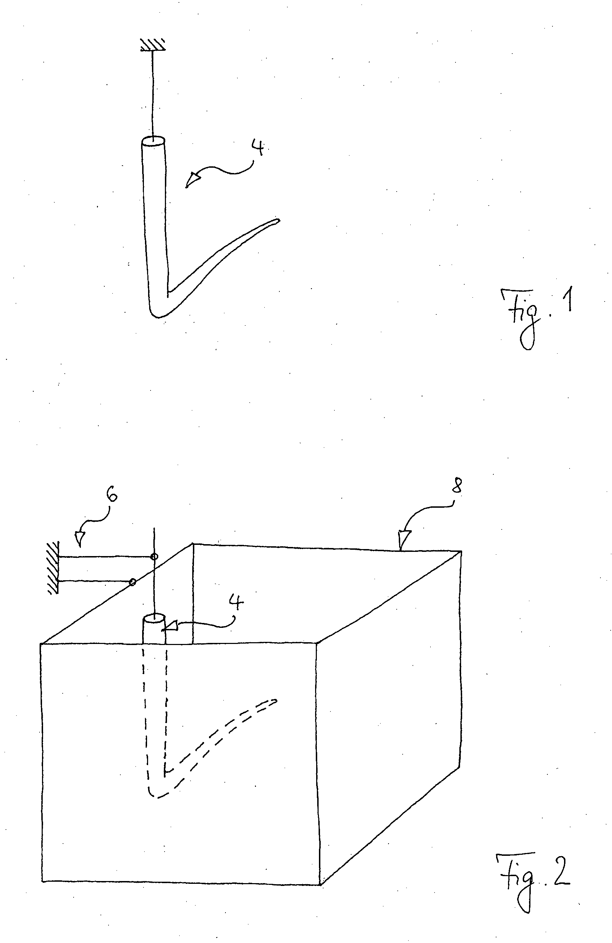

Diese und weitere Vorteile und Merkmale der Erfindung werden anhand der folgenden Abbildungen eines Ausführungsbeispiels der Erfindung weiter beschrieben. Darin zeigen
- Fig. 1 bis 7: schematische Ansichten aufeinander folgender Schritte des erfindungsgemäßen Verfahrens zur Herstellung eines Gussteils, das Hohlraumstrukturen aufweist.

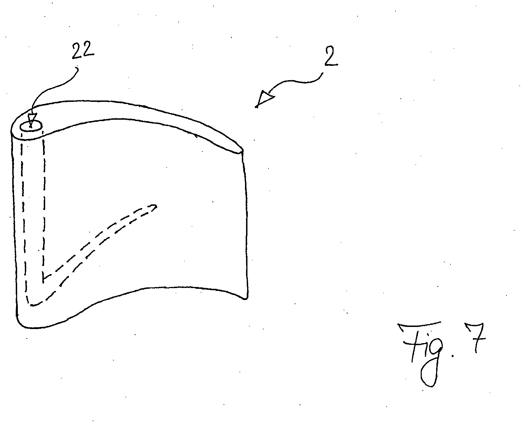

Unter Verwendung eines 3D-Modells mit digitalen Geometriekoordinaten (nicht dargestellt) eines Gussbauteils 2 (Fig. 7) wird gemäß Fig. 1 in einem anfänglichen Verfahrensschritt ein Kern 4 gemäß dem 3D-Modell in einem ersten CNC-Herstellungsverfahren, nämlich durch CNC-Fräsen (nicht dargestellt), hergestellt.

Gemäß Fig. 2 wird in einem nächsten Verfahrensschritt der Kern 4 in einer Bearbeitungshalterung 6 positioniert. Um den Kern herum wird ein Volumen 8 angeordnet und ebenfalls in der Bearbeitungshalterung 6 positioniert und befestigt.

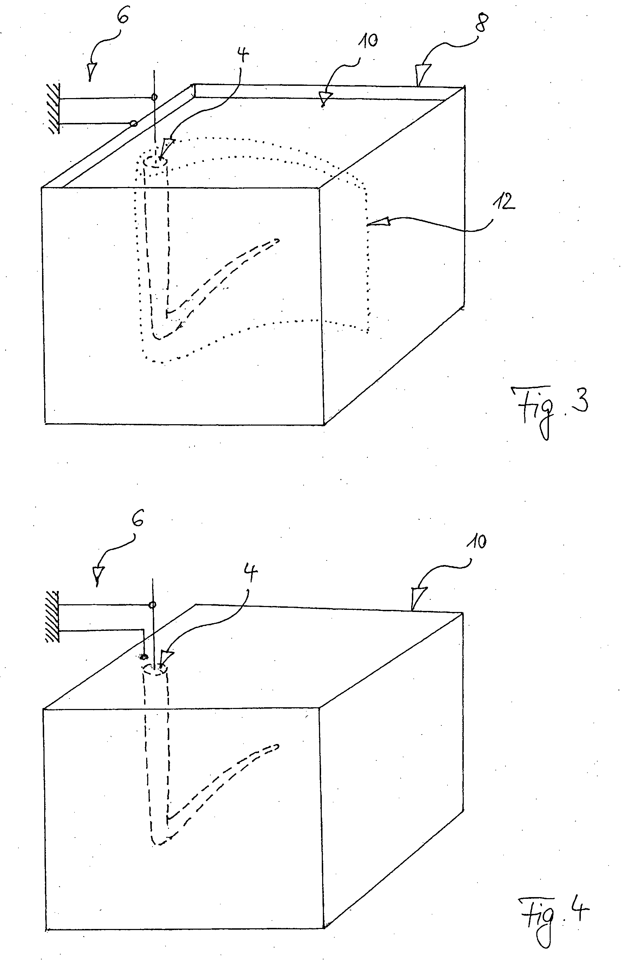

Gemäß Fig. 3 wird in einem nächsten Verfahrensschritt Modellwachs 10 um den Kern 4 herum in das Volumen 8 gegossen. Das Volumen 8 ist größer als die Gussteilkubatur 12, und so wird das Modellwachs 10 allseits bis über die Gussteilkubatur 12 hinaus um den Kern 4 herum in das Volumen 8 gegossen. Die räumliche Position der Gussteilkubatur 12 ist gemäß dem 3D-Modell (nicht dargestellt) des Gussbauteils 2 (Fig. 7) festgelegt durch die Position des Kerns 4 in der Bearbeitungshalterung 6.

Gemäß Fig. 4 wird in einem nächsten Verfahrensschritt der Modellwerkstoff 10 nun um den Kern 4 herum erstarren gelassen und das Volumen 8 entfernt.

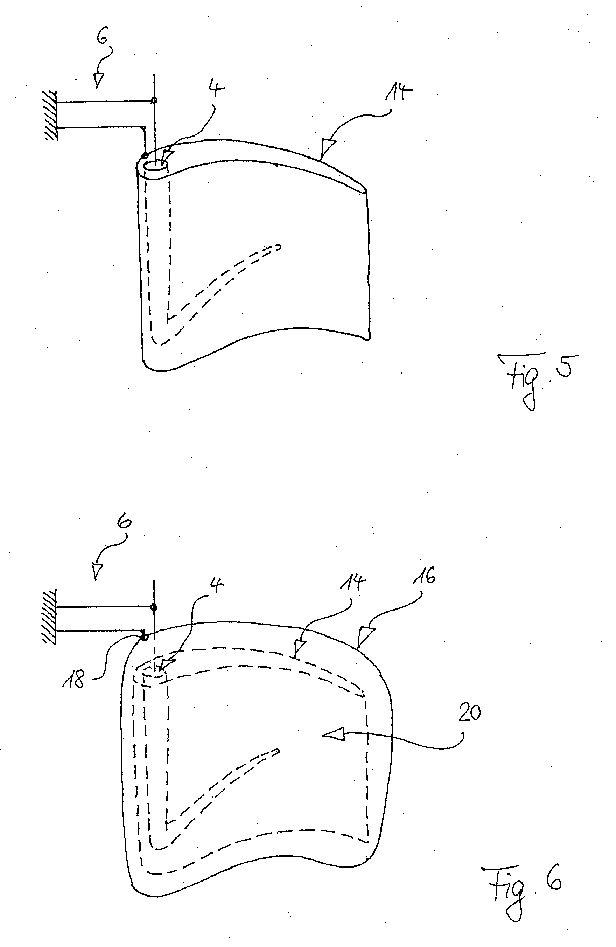

Gemäß Fig. 5 wird in einem nächsten Verfahrensschritt die Außenkontur eines temporären (verlorenen) Modells 14 des Gussteils 2 (Fig. 7) um den Kern 4 herum hergestellt, und zwar aus dem erstarrten Modellwerkstoff 10 gemäß dem 3D-Modell (nicht dargestellt) in einem zweiten CNC-Herstellungsverfahren, nämlich wiederum durch CNC-Fräsen (nicht dargestellt).

Gemäß Fig. 6 wird in einem nächsten Verfahrensschritt eine keramische Form 16 auf die Außenkontur des verlorenen Modells 14 aufgetragen und dabei eine positionierende Verbindung 18 der keramischen Form 16 mit der Bearbeitungshalterung 6 ausgebildet, so dass die keramische Form 16 bezüglich des Kerns 4 maßgenau gemäß dem 3D-Modell (nicht dargestellt) des Gussbauteils 2 (Fig. 7) durch die Bearbeitungshalterung 6 positioniert ist. In einem nächsten Verfahrensschritt wird das verlorene Modell 14 aus der keramischen Form 16 um den Kern 4 herum (die beide weiter von der Bearbeitungshalterung 6 gehalten und zueinander positioniert werden) entfernt. Eine Hohlform 20 entsteht zwischen der Oberfläche des keramischen Kerns 4 und der Innenfläche 14 der keramischen Form 16. In einem nächsten Verfahrensschritt wird dort hinein geschmolzenes Metall (nicht dargestellt) gegossen. In einem nächsten Verfahrensschritt wird dieses abkühlen gelassen.

Das geschmolzene Metall (nicht dargestellt) erstarrt zu dem festen Gussteil 2, das gemäß Fig. 7 in einem nächsten Verfahrensschritt durch Entfernen der keramischen Form 16 und des Kerns 4 von dem Gussteil 2 sichtbar wird und so als Bauteil mit dem Kern 4 entsprechender Hohlraumstruktur 22 mit großer Maßgenauigkeit zur Verfügung steht.

## Patentansprüche

1. Verfahren zur Herstellung eines Gussteils (2), das Hohlraumstrukturen (22) aufweist, unter Verwendung eines 3D-Modells digitaler Geometriekoordinaten des Gussteils mittels einer keramischen Form (16), wobei das Verfahren die folgenden Schritte umfasst:
a) CNC-Herstellung des Kerns (4) gemäß dem 3D-Modell in einem ersten CNC-Herstellungsverfahren;
b) Positionieren des Kerns (4) in einer Bearbeitungshalterung (6);
c) Gießen von Modellwerkstoff (10) um den Kern (4) herum in ein Volumen (8) größer als die Gussteilkubatur (12), welche gemäß dem 3D-Modell räumlich festgelegt ist durch die Position des Kerns (4) in der Bearbeitungshalterung (6), und erstarren Lassen des Modellwerkstoffs (10);
d) CNC-Herstellung einer Außenkontur eines verlorenen Modells (14) des Gussteils mit der Kubatur (12), welche gemäß dem 3D-Modell räumlich festgelegt ist durch die Position des Kerns (4) in der Bearbeitungshalterung (6), aus dem erstarrten Modellwerkstoff (10) um den Kern (4) herum gemäß dem 3D-Modell in einem zweiten CNC-Herstellungsverfahren;
e) Auftragen einer keramischen Form (16) auf die Außenkontur des verlorenen Modells (14) und Ausbilden einer positionierenden Verbindung (18) der keramischen Form (16) mit der Bearbeitungshalterung (6);
f) Entfernen des verlorenen Modells (14) aus der keramischen Form (16) um den Kern (4) in der Bearbeitungshalterung (6);
g) Gießen von Metall in die keramische Form (16) um den Kern (4) in der Bearbeitungshalterung (6);
h) Erstarren des geschmolzenen Metalls zu dem festen Gussteil und
i) Entfernen der keramischen Form (16) und des Kerns (4) von dem Gussteil.

2. Verfahren nach einem der vorhergehenden Ansprüche, **dadurch gekennzeichnet, dass** in Schritt a) das erste CNC-Herstellungsverfahren CNC-Fräsen ist oder ein generatives Fertigungsverfahren wie zum Beispiel 3D-Drucken, selektives Laserschmelzen oder -sintern.

3. Verfahren nach einem der vorhergehenden Ansprüche, **dadurch gekennzeichnet, dass** in Schritt d) das zweite CNC-Herstellungsverfahren ein spannendes Verfahren, insbesondere CNC-Fräsen, ist.

## Claims

1. Method of producing a casting (2) which has cavity structures (22), by means of a ceramic mould (16), using a 3D model of digital co-ordinates of the geometry of the casting, wherein the method comprises the following steps:
a) production by CNC of the core (4) in accordance with the 3D model in a first CNC production process,
b) positioning of the core (4) in a mounting for machining (6),
c) casting of modelling material (10) around the core (4) in a volume-holder (8) larger than the cubic volume (12) of the casting, the position of which cubic volume (12) in space is fixed, in accordance with the 3D model, by the position of the core (4) in the mounting for machining (6), and allowing of the modelling material (10) to solidify,
d) production by CNC in a second CNC production process, from the solidified modelling material (10) around the core (4) and in accordance with the 3D model, of an external configuration of a lost model (14) of the casting which is of the cubic volume (12), the position of which cubic volume (12) in space is fixed, in accordance with the 3D model, by the position of the core (4) in the mounting for machining (6),
e) application of a ceramic mould (16) to the external configuration of the lost model (14) and creation of a positioning connection (18) between the ceramic mould (16) and the mounting for machining (6),
f) removal of the lost model (14) from the ceramic mould (16) around the core (4), on the mounting for machining (6),
g) casting of metal in the ceramic mould (16) around the core (4), on the mounting for machining (6),
h) solidification of the molten metal into the solid casting, and
i) removal of the ceramic mould (16) and the core (4) from the casting.

2. Method according to one of the preceding claims, **characterised in that**, in step a), the first CNC production process is CNC milling or a generative production process such for example as 3D printing, selective laser melting or selective laser sintering.

3. Method according to one of the preceding claims, **characterised in that**, in step d), the second CNC production process is a stock-removing process and in particular CNC milling.

## Revendications

1. Procédé de fabrication d'une pièce moulée (2) qui présente des structures alvéolaires (22), en utilisant un modèle 3D de coordonnées de géométrie numériques de la pièce moulée au moyen d'un moule en céramique (16), dans lequel le procédé comporte les étapes suivantes :
a) la fabrication du noyau (4) par commande CNC selon le modèle 3D dans un premier procédé de fabrication par commande CNC ;
b) le positionnement du noyau (4) dans un support d'usinage (6) ;
c) le moulage de matériau de modèle (10) autour du noyau (4) dans un volume (8) supérieur à la cubature de la pièce moulée (12) qui est fixée dans l'espace selon le modèle 3D par la position du noyau (4) dans le support d'usinage (6), et le fait de laisser se solidifier le matériau de modèle (10) ;
d) la fabrication par commande CNC d'un contour extérieur d'un modèle perdu (14) de la pièce moulée avec la cubature (12) qui est fixée dans l'espace selon le modèle 3D par la position du noyau (4) dans le support d'usinage (6), à partir du matériau de modèle solidifié (10) autour du noyau (4) selon le modèle 3D dans un second procédé de fabrication par commande CNC ;
e) l'application d'un moule en céramique (16) sur le contour extérieur du modèle perdu (14) et la réalisation d'une liaison de positionnement (18) du moule en céramique (16) avec le support d'usinage (6) ;
f) le retrait du modèle perdu (14) du moule en céramique (16) autour du noyau (4) dans le support d'usinage (6) ;
g) le moulage de métal dans le moule en céramique (16) autour du noyau (4) dans le support d'usinage (6) ;
h) la solidification du métal en fusion en pièce moulée solide et
i) le retrait du moule en céramique (16) et du noyau (4) de la pièce moulée.

2. Procédé selon l'une quelconque des revendications précédentes, **caractérisé en ce que** dans l'étape a) le premier procédé de fabrication par commande CNC est un fraisage par commande CNC ou un procédé de fabrication génératif tel que l'impression 3D, la fusion ou le frittage au laser sélectif.

3. Procédé selon l'une quelconque des revendications précédentes, **caractérisé en ce que** dans l'étape d) le second procédé de fabrication par commande CNC est un procédé par enlèvement de copeaux, en particulier un fraisage par commande CNC.
